Europäisches Patentamt

European Patent Office

Office européen des brevets

(19)

(11) **EP 0 985 197 B1**

(12) **FASCICULE DE BREVET EUROPEEN**

(45) Date de publication et mention
de la délivrance du brevet:
**25.05.2005 Bulletin 2005/21**

(21) Numéro de dépôt: **99903738.5**

(22) Date de dépôt: **11.02.1999**

(51) Int Cl.⁷: **G07C 9/00**

(86) Numéro de dépôt international:
**PCT/FR1999/000311**

(87) Numéro de publication internationale:
**WO 1999/041709 (19.08.1999 Gazette 1999/33)**

(54) **PROCEDE POUR PRODUIRE UNE IMAGE AU MOYEN D'UN OBJET PORTATIF**

VERFAHREN ZUM ERZEUGEN EINES BILDES MIT HILFE EINES TRAGBAREN GEGENSTANDES, TRAGBARER GEGENSTAND UND VORRICHTUNG ZUM DURCHFÜHREN DES VERFAHRENS

METHOD FOR PRODUCING AN IMAGE USING A PORTABLE OBJECT

(84) Etats contractants désignés:
**BE CH DE DK ES FR GB IE IT LI LU NL PT SE**

(30) Priorité: **12.02.1998 FR 9801702**

(43) Date de publication de la demande:
**15.03.2000 Bulletin 2000/11**

(73) Titulaire: **CP8 Technologies**
**78431 Louveciennes (FR)**

(72) Inventeur: **BENEZETH, Philippe**
**F-95870 Bezons (FR)**

(74) Mandataire: **Renault, Patricia Marie Jacqueline**
**Axalto SA**
**Direction Propriété Industrielle**
**36-38, rue de la Princesse**
**B.P. 45**
**78431 Louveciennes Cedex (FR)**

(56) Documents cités:
WO-A-82/02445          WO-A-85/04035
DE-A- 4 201 966        FR-A- 2 605 935
US-A- 4 338 025        US-A- 4 836 786
US-A- 4 904 853        US-A- 5 396 559

EP 0 985 197 B1

## Description

Dans le domaine du transport et du traitement des données informatiques, plusieurs mécanismes doivent être respectés pour garantir la sécurité : authentification des individus et des données, chiffrement et déchiffrement des données confidentielles. Depuis un certain nombre d'années, les cartes à microcircuits communément appelées "cartes à puce" sont utilisées pour mettre en oeuvre les mécanismes précités. Ces cartes sont dotées d'un microprocesseur qui, conformément à un programme contenu dans une mémoire ROM, contrôle l'accès aux informations stockées dans une mémoire programmable.

La carte à puce est un objet portable qui peut être confié à un individu ou à un groupe d'individus. Pour pouvoir accéder aux informations mémorisées dans la mémoire du microcircuit, il peut être obligatoire d'authentifier le ou les utilisateurs de la carte. Pour cela, une première méthode consiste à demander à l'utilisateur d'élaborer un code porteur (ou "P.I.N." , de l'anglais Personal Identification Number) sur un clavier, et à transmettre ce code au microcircuit de la carte. Ce dernier le compare avec un code de référence et, en cas d'égalité, l'utilisateur est habilité à accéder aux informations de la carte.

La multiplicité des applications utilisant des cartes à microcircuit entraîne la multiplicité des codes porteurs. Les utilisateurs ont souvent des difficultés à se rappeler plusieurs codes porteurs. Une solution consiste à identifier les utilisateurs à l'aide d'une empreinte biométrique. Cette empreinte peut être celle des doigts, celle du fond de la rétine ou encore la forme particulière de la signature. Dès lors, les utilisateurs n'ont plus besoin de se rappeler leur code porteur : ils présentent le doigt, ou soumettent l'oeil à l'analyse d'une caméra, ou encore effectuent une signature manuelle sur un afficheur tactile.

Cette solution présente un inconvénient au niveau de la sécurité. L'empreinte quel quelle soit, est perçue par un appareil et les signaux sont communiqués à la carte par une liaison électrique. Un fraudeur peut mettre un espion sur cette liaison et ainsi enregistrer les signaux caractéristiques de l'empreinte d'un individu. Ce faisant, il peut reproduire ces signaux et se faire passer pour cet individu. Le problème vient du fait qu'une empreinte biométrique reste immuable et de valeur fixe. A l'opposé, les codes porteurs peuvent être changés lôrsqu'ils sont mémorisés dans la mémoire programmable d'une carte, mais comme on vient de l'expliquer, cette solution présente d'autres inconvénients majeurs.

Une autre façon de faire consiste à intégrer le capteur d'empreinte directement sur le circuit de la carte. Un grand constructeur de circuits intégrés a mis récemment sur le marché un circuit capable de saisir une empreinte digitale par des micro-capteurs de pression et de traiter l'information pour en extraire une donnée caractéristique de l'empreinte. Mais l'acquisition des sillons d'un doigt s'effectue sur une surface importante de l'ordre du centimètre carré : le capteur doit donc posséder une longueur d'au moins un centimètre. Une telle taille empêche un tel circuit d'être encarté, car une carte à puce doit pouvoir subir des flexions importantes.

Un premier but de la présente invention est de pouvoir effectuer une reconnaissance d'empreinte biométrique en évitant la fraude et les problèmes mécaniques précédemment décrits.

Un second but de l'invention est de disposer d'une surface d'acquisition de l'empreinte qui est personnelle au porteur de carte, de façon que, sur un appareil d'acquisition d'empreinte associé, il ne reste aucune trace susceptible d'être détectée.

Un troisième but de l'invention est de fournir des moyens pour transmettre une image sur un écran, qui puisse être correctement visualisée seulement par un ou des observateurs particuliers qui détiennent des droits prédéfinis.

Un quatrième but de l'invention est de fournir des moyens d'identification associés à une image projetée sur un écran et définissant une identité d'une personne habilitée à visualiser cette image, ou d'un objet portatif détenu par cette personne et au moyen duquel l'image est projetée.

L'invention concerne à cet effet un procédé pour produire une image déterminée au moyen d'un dispositif et d'un objet portatif, le dispositif comprenant des moyens de traitement de l'information, des moyens de mémorisation de l'information, et des moyens de traitement d'image, et l'objet portatif comprenant des moyens de traitement de l'information, des moyens de mémorisation de l'information, une fenêtre traversante, et des moyens d'affichage pouvant afficher une image devant la fenêtre, caractérisé en ce qu'il comprend les étapes consistant à :

- disposer ladite fenêtre de l'objet portatif devant les moyens de traitement d'image du dispositif de façon qu'ils coopèrent optiquement entre eux ;
- produire devant ladite fenêtre une première image ;
- faire afficher par les moyens d'affichage de l'objet portatif une seconde image d'objet portatif ; et
- obtenir ladite image déterminée par superposition de la première image et de la seconde image d'objet portatif.

D'autres détails et avantages de la présente invention apparaîtront au cours de la description suivante de quelques modes d'exécution préférés mais non limitatifs, en regard des dessins annexés sur lesquels :

La figure 1 est un schéma de principe d'une carte à puce selon l'invention , coopérant avec un dispositif de traitement de l'information ;
La figure 2 est une vue en plan de la carte à puce de la figure 1, montrant sa constitution pratique ;
La figure 3 est une vue en coupe de la carte , selon la ligne III-III de la figure 2 ;

La figure 4 est une vue en perspective d'un lecteur destiné à coopérer avec la carte de la figure 2 ;

La figure 4a est un tableau de masques utilisé dans une procédure d'authentification d'empreinte digitale ;

La figure 5 est un organigramme de la procédure d'authentification d'empreinte digitale ;

Les figures 5a à 5d illustrent un premier type de masque ;

Les figures 6a et 6b illustrent la notion de points d'intersection de sillons d'empreinte ;

Les figures 7a à 7d illustrent un second type de masque ;

Les figures 8a à 8c illustrent une façon de décomposer une image en deux images partielles ;

La figure 9 illustre un projecteur utilisé dans une procédure de projection d'une image à partir de l'afficheur d'une carte ;

Les figures 10a à 10c représentent trois autres tableaux de masques utilisés dans une procédure d'authentification d'empreinte digitale;

La figure 11 est un organigramme d'une procédure d'authentification d'empreinte digitale, utilisant les tableaux de masques des figures 10a à 10c ;

La figure 12 illustre un écran coopérant selon l'invention avec une carte , dans une procédure de recomposition d'une image décomposée ;

Les figures 13 et 14 illustrent respectivement la carte et un détail de l'écran de la figure 12 ;

La figure 15 présente une image comportant une identité visuelle ;

La figure 16 est une vue en coupe longitudinale d'une carte selon une autre forme de réalisation de l'invention ;

La figure 17 est une vue en plan de la carte de la figure 16 ; et

La figure 18 est une vue en coupe longitudinale d'une carte selon encore une autre forme de réalisation de l'invention.

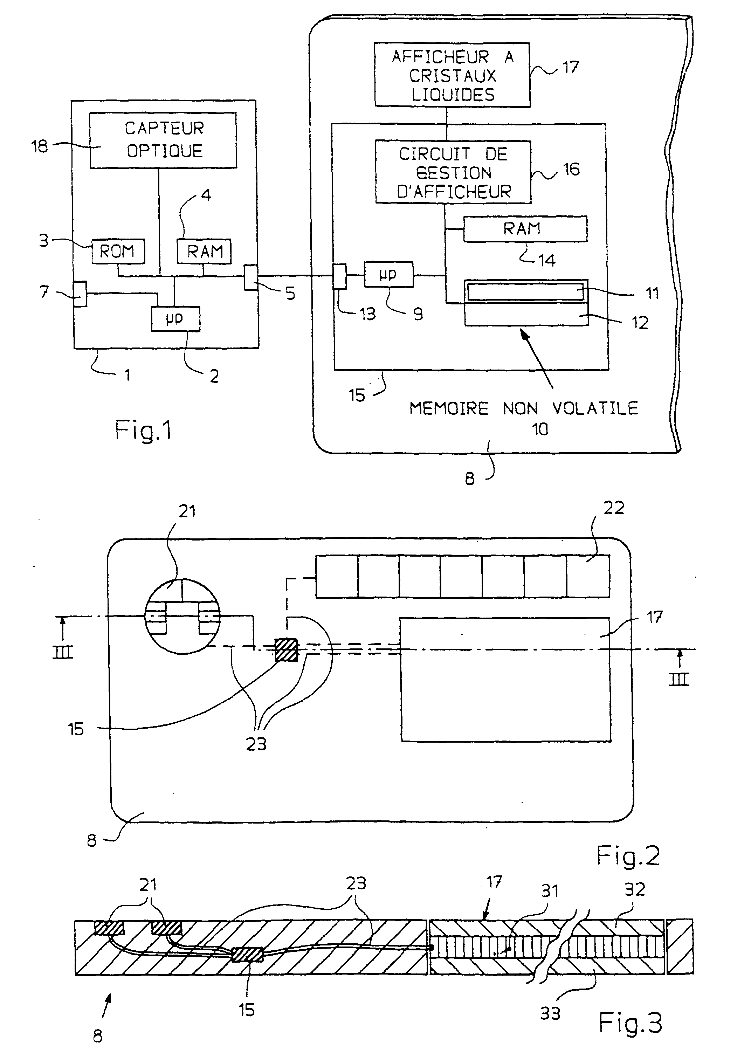

Le dispositif de traitement de l'information 1 représenté sur la figure 1 comprend de façon connue en soi un microprocesseur 2 auquel sont reliés une mémoire ROM 3, et une mémoire RAM 4, des moyens 5 pour coopérer, avec ou sans contact physique, avec une carte à puce 8, et une interface de transmission 7 permettant au dispositif de traitement de l'information de communiquer avec un autre dispositif semblable, soit directement, soit au travers d'un réseau de communication. Un capteur optique 18 de saisie d'une empreinte digitale est également relié au microprocesseur 2.

Le dispositif 1 peut en outre être équipé de moyens de stockage tels que des disquettes ou disques amovibles ou non, de moyens de saisie (tels qu'un clavier et/ou un dispositif de pointage du type souris) et de moyens d'affichage, ces différents moyens n'étant pas représentés sur la figure 1.

Le dispositif de traitement de l'information peut être constitué par tout appareil informatique installé sur un site privé ou public et apte à fournir des moyens de gestion de l'information ou de délivrance de divers biens ou services, cet appareil étant installé à demeure ou portable. Il peut notamment s'agir aussi d'un appareil de télécommunications.

Par ailleurs, la carte 8 porte une puce 15 incluant des moyens de traitement de l'information 9, une mémoire non volatile 10, une mémoire volatile de travail RAM 14, et des moyens 13 pour coopérer avec le dispositif de traitement de l'information. Cette puce est agencée pour définir, dans la mémoire 10, une zone secrète 11 dans laquelle des informations une fois enregistrées, sont inaccessibles depuis l'extérieur de la puce mais seulement accessibles aux moyens de traitement 9, et une zone libre 12 qui est accessible depuis l'extérieur de la puce pour une lecture et/ou une écriture d'informations. Chaque zone de la mémoire non volatile 10 peut comprendre une partie non modifiable ROM et une partie modifiable EPROM, EEPROM, ou constituée de mémoire RAM du type "flash", c'est-à-dire présentant les caractéristiques d'une mémoire EEPROM avec en outre des temps d'accès identiques à ceux d'une RAM classique.

Par ailleurs, la puce 15 inclut un circuit de *gestion* d'afficheur 16 relié au moyens de traitement 9 et destiné à commander un afficheur d'image 17 extérieur à la puce 15 mais situé aussi sur la carte 8. Le circuit de *gestion* d'afficheur 16 reçoit en parallèle des données venant des moyens de traitement 9, par exemple des caractères ASCI, et affiche ces données en contrôlant des pixels constituant l'afficheur. Quant à l'afficheur, il s'agit notamment d'un afficheur à cristaux liquides, mais celui-ci peut, en variante, être remplacé par tout autre afficheur capable d'afficher une image en fonction de signaux électriques.

En tant que puce 15, on pourra notamment utiliser un microprocesseur à mémoire non volatile autoprogrammable, tel que décrit dans le brevet américain n° 4.382.279 au nom de la Demanderesse. Comme indiqué en colonne 1, lignes 13-25 de ce brevet, le caractère autoprogrammable de la mémoire correspond à la possibilité pour un programme fi situé dans cette mémoire, de modifier un autre programme fj situé également dans cette mémoire en un programme gj. Un exemple de tel circuit, capable de gérer directement un afficheur à cristaux liquides, est fabriqué par la société SAMSUNG, sous la référence KF56C220 (doté d'une ROM) ou dans la série KS56 (doté d'EEPROM), ou fabriqué par la société NEC sous la référence μPD78.

Dans une variante, le microprocesseur de la puce 15 est remplacé - ou tout du moins complété - par des circuits logiques implantés dans une puce à semi-conducteurs. En effet, de tels circuits sont aptes à effectuer des calculs, notamment d'authentification et de signature, grâce à de l'électronique câblée, et non microprogrammée. Ils peuvent notamment être de type ASIC (de l'anglais « Application Specific Integrated Circuit »). A titre d'exemple, on peut citer le composant de la société SIEMENS commercialisé sous la référence SLE 4436 et celui de la société SGS-THOMSON commercialisé sous la référence ST 1335.

Avantageusement, la puce sera conçue sous forme monolithique. Selon une variante, le circuit de gestion d'afficheur 16 est sur une puce différente d'une autre puce contenant les moyens de traitement 9 et les mémoires 10,14.

Une carte dotée d'un afficheur à cristaux liquides est connue en soi. Le brevet EP-A-0 167 044 montre un objet portable de type carte de crédit, doté d'une unité centrale, de moyens de mémorisation, de moyens d'entrée/sortie sous la forme de plages de contacts électriques, d'un clavier, de cellules solaires pour l'alimentation, et d'un afficheur à cristaux liquides. L'objet sert de moyen de paiement, de calculatrice, et d'agenda électronique. L'afficheur à cristaux liquides affiche des caractères alphanumériques consistant en des données introduites par le clavier ou des résultats de calculs effectués par la carte.

Un afficheur à cristaux liquides possède des propriétés très intéressantes : il est très plat et peut donc être mis dans une carte à puce. Le principe d'un tel afficheur réside, on le rappelle, dans la propriété de certains liquides de passer d'un état « transparent » à « opaque » lorsqu'ils sont soumis à une tension électrique. Ce faisant, ils se polarisent et font obstacle ou non à la lumière selon que l'on applique une tension ou pas. Ils n'émettent pas de lumière mais utilisent la lumière ambiante : ainsi, un afficheur à cristaux liquides consomme très peu d'énergie, ce qui est également très utile pour une carte à puce, car il peut fonctionner même lorsque la carte n'est pas connectée électriquement au dispositif de traitement de l'information 1, en utilisant l'énergie d'une pile ou de bobines.

Pour afficher des caractères alphanumériques ou une image quelconque, un afficheur à cristaux liquides est constitué en matrice de points individuellement commandés électriquement, appelés des "pixels". La matrice peut par exemple être faite de 7 rangées et de 5 colonnes, ce qui définit 35 pixels. La plupart des caractères standard (codes selon la norme ASCII) peuvent s'afficher à l'aide d'une telle matrice. L'afficheur possède un fond qui réfléchit les rayons lumineux sauf aux endroits où des pixels, soumis à une tension, sont opaques et apparaissent en noir. On verra par la suite que l'on peut utiliser un écran simplifié possédant huit bandes individuellement adressables.

Revenant à l'invention , la figure 2 montre la disposition des différents composants de la carte , sur celle-ci. La puce 15 est située dans une région centrale de la carte et est reliée à l'afficheur 17, à plusieurs plages de contacts électriques 21 destinés à coopérer avec le dispositif de traitement de l'information 1 dans le cas où ce mode de communication est choisi, ainsi qu'éventuellement à une barre de cellules solaires 22 dans le cas où ce mode d'alimentation de la carte est choisi. Des fils de liaison sont représentés en 23.

Selon un premier mode de réalisation, l'afficheur doit posséder au moins la même taille qu'une fenêtre d'acquisition d'une empreinte digitale, soit 1 sur 1,5 centimètre environ. De telles dimensions sont rendues possibles par le fait que, à l'inverse d'une puce électronique, un afficheur à cristaux liquides est relativement souple, de sorte qu'il sera peu affecté par une mise en flexion de la carte. Toute image qui se forme sur l'afficheur est constituée de pixels transparents ou opaques , les pixels opaques apparaissant alors de couleur noire. Les pixels sont individuellement adressables par la puce. Ils peuvent prendre toutes les formes : points, bandes ou surfaces de dimensions quelconques. D'autres usages d'une telle carte peuvent nécessiter des tailles plus grandes, pour afficher un texte par exemple. On le verra par la suite, l'afficheur réalise une image partielle. La précision de cette image dépend directement de la taille d'un pixel. Chaque pixel peut être activé indépendamment des autres, ce qui permet entre autres d'élaborer des graphismes.

Une coupe de la carte selon le premier mode de réalisation de l'invention est présentée à la figure 3. On y voit les contacts 21, la puce 15, et l'afficheur 17, reliés entre eux par les fils de liaison 23. L'afficheur 17 s'étend dans toute l'épaisseur de la carte et comprend au moins trois couches 31 à 33. Une couche active 31 intérieure constitue l'afficheur proprement dit et est formée d'un matériau renfermant des cristaux liquides : elle est divisée en autant de « poches à cristaux liquides » que l'afficheur comporte de pixels. Selon une particularité importante de l'invention , deux couches extérieures 32, 33 emprisonnent la couche active 31 et sont en un matériau transparent, tel que le plastique : elles constituent ensemble une fenêtre traversante dans la carte.

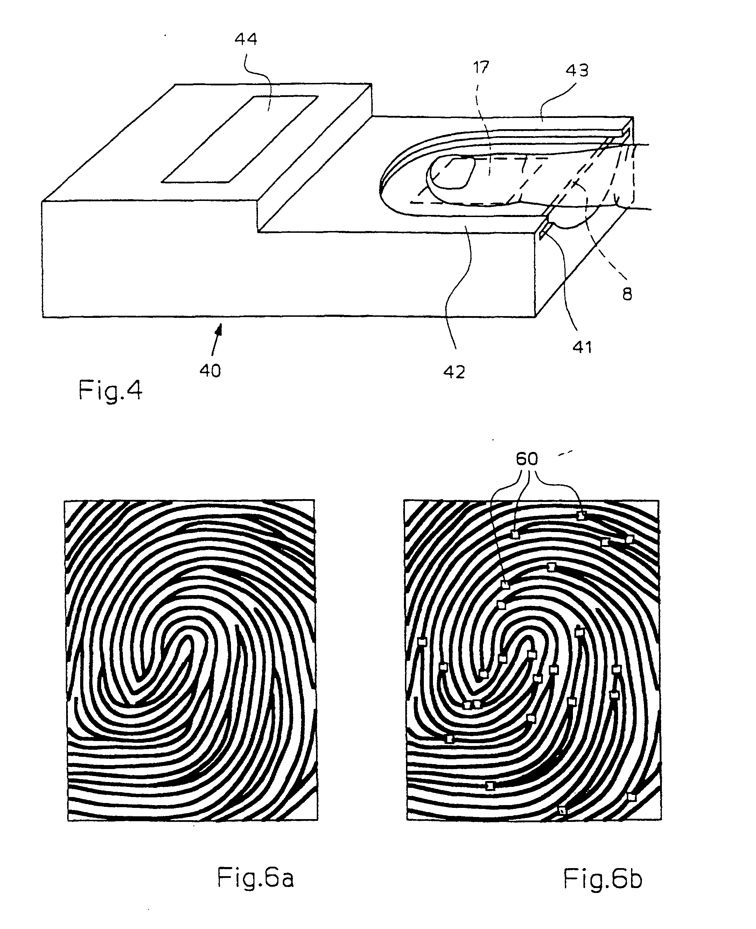

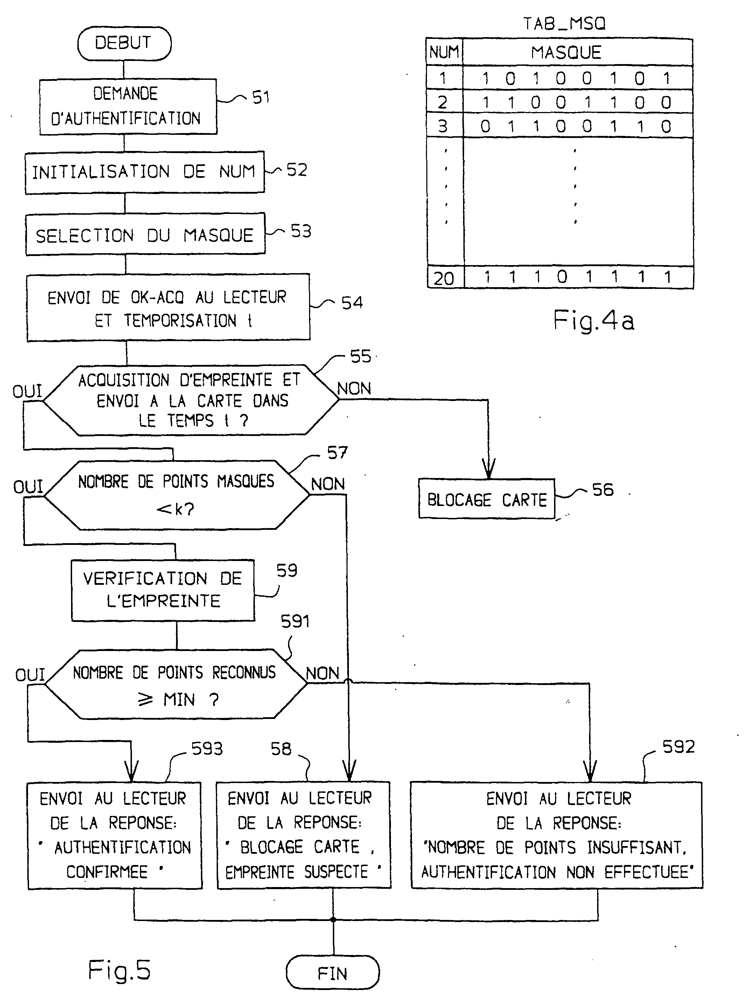

La carte étant maintenant décrite, nous allons montrer une première utilisation de celle-ci pour l'authentification de son porteur, en relation avec la figure 4. La carte est introduite dans un lecteur de carte 40 correspondant au dispositif de traitement de l'information 1 de la figure 1, et dont l'interface de transmission (7, figure 1) permet une liaison vers un centre de contrôle. La carte 8 est introduite dans une encoche de saisie 41 et est maintenue entre deux glissières 42,43. La partie de la carte qui reste apparente contient l'afficheur à cristaux liquides transparent 17. Dans cette position, l'afficheur à cristaux liquides est situé juste au-dessus du capteur de telle sorte qu'une fenêtre de saisie de l'empreinte, faisant partie du capteur, coïncide avec la totalité ou une partie de l'afficheur. Il est important, pour l'acquisition de l'empreinte, que la carte occupe toujours la même position dans le lecteur. Avantageusement, le lecteur inclut un écran de visualisation 44.

Une méthode pour authentifier les empreintes digitales consiste à repérer les intersections des sillons sur un doigt. La figure 6a montre un dessin d'une empreinte digitale tandis que sur la figure 6b on montre, par des petits carrés 60, les points d'intersection des sillons de la figure 6a. Chaque intersection est identifiée comme un point caractérisé par des coordonnées scalaires (x, y) à partir d'un repère défini par le capteur. Supposons qu'un doigt présente une empreinte comportant K points d'intersection : la caractéristique de cette empreinte est donc l'ensemble des K points de cordonnées $(x_i, y_i)$ avec i variant de 1 à K. Pour s'affranchir de la particularité du capteur, les K points sont mémorisés par leur adresses relatives. L'un d'entre eux est alors choisi comme origine : il possède donc les coordonnées (0,0). Les coordonnées des autres points sont déterminées en fonction de lui. Par convention, ce point choisi comme origine peut être celui le plus en bas à gauche de l'empreinte.

L'authentification du porteur de la carte suppose une phase préalable de personnalisation de la carte dans laquelle les coordonnées relatives d'un porteur authentique et concernant une empreinte de référence sont mémorisées dans la carte. Ensuite, pour chacune des procédures d'authentification qui interviendront, les coordonnées relatives du porteur à authentifier, dont l'empreinte sera prélevée par le capteur du lecteur 40 , seront comparées à celles mémorisées dans la carte. Cette comparaison s'effectue en considérant tout d'abord l'origine des points issus de l'empreinte de référence et l'origine des points issus de l'empreinte à authentifier. Puis, on vérifie si les autres points de l'empreinte à authentifier, reconnus par le lecteur; peuvent correspondre à ceux de l'empreinte de référence. A l'issue de la procédure de comparaison, la carte compte un nombre de points authentiques correspondant aux points communs à l'empreinte de référence et à l'empreinte à authentifier. Si ce nombre est supérieur à une certaine valeur, la carte considère l'empreinte à authentifier comme authentique.

Une empreinte digitale peut contenir des dizaines de points d'intersection, en moyenne une trentaine. La mémoire de la carte doit posséder le maximum de coordonnées de ces points. Lors de l'authentification d'une empreinte, il est inutile de vérifier l'existence de tous ces points : il suffit de vérifier les coordonnées relatives d'une partie d'entre eux, par exemple une dizaine. Ce qui revient à dire que l'on est autorisé à masquer les deux tiers de l'empreinte. Le raisonnement mathématique qui suit va nous prouver que dix points sont suffisants pour effectuer une authentification de façon quasi certaine.

Prenons un capteur d'empreintes digitales possédant une résolution d'un dixième de millimètre et une surface active de captation de douze par douze millimètres. Ce capteur possède 14400 cellules individuelles ou pixels. Après reconnaissance du tracé des sillons, une trentaine de points d'intersection sont reconnus. En utilisant le procédé décrit, l'afficheur à cristaux liquides réalise un masquage, par exemple de 75% de la surface totale, de sorte que le nombre de pixels vus par le capteur est divisé par quatre, soit 3600. En moyenne, un quart des points d'intersection est détecté, c'est à dire 7 environ. Celui qui sert d'origine n'entre pas en compte lors de l'authentification, de sorte que le test porte sur six points. Le nombre de combinaisons possibles de 6 points parmi 3599 est de :

$$C3599^6 = (3599)! / [(3599-6)! \times 6!] = 3.10^{18}$$

où C représente le nombre de combinaisons, et (!) est la fonction factoriel.

Si on tolère une seule erreur d'acquisition parmi ces six points, le nombre de combinaisons est de :

$$C3599^5 = (3599)! / [(3599-5)! \times 5!] = 5.5\ 10^{15}.$$

La probabilité pour que, dans une population de 1 million d'habitants, deux empreintes possèdent six points d'intersection à des emplacements relatifs identiques est d'une chance sur $5.5\ 10^9$. Le risque d'erreur étant donc très faible, on peut en conclure que la diminution par trois de la surface d'acquisition (suggérée ci-dessus) n'altère pas de manière significative la qualité de l'authentification.

Selon une caractéristique spécifique de l'invention, la carte est agencée pour que l'afficheur se comporte comme un masque , masquant partiellement une image d'empreinte digitale parvenant au capteur. Ainsi, une modification aléatoire du masque , lors de chaque acquisition d'empreinte , permet de rendre aléatoire une image partielle d'empreinte parvenant au capteur. La conséquence est que , si un éventuel fraudeur arrive à prélever des données d'image partielle d'empreinte grâce à un accès frauduleux au lecteur 40, il ne pourra pas réutiliser ces données en vue de s'authentifier ultérieurement car la carte aura a priori sélectionné , pour l'authentification ultérieure, un masque différent.

L'afficheur à cristaux liquides est, dans l'exemple considéré, constitué de huit bandes individuellement adressables par le microprocesseur 9 de la carte. Chacune de ces bandes peut être rendue transparente ou opaque selon qu'on y applique une tension ou non. Par convention, si le microprocesseur envoie la valeur « 1 » sur le port d'entrée/sortie de l'afficheur, la bande correspondante est transparente. Si la valeur « 0 » est appliquée, la bande est rendue opaque. Afin d'augmenter le niveau de sécurité, il est bien sûr possible de choisir un nombre de bandes supérieur à huit.

La carte contient, dans la zone secrète 11 de sa mémoire non volatile 10, un tableau de masques appelé « TAB_MSQ » qui permet d'établir une correspondance entre un numéro de sélection de masque NUM et un masque défini par une valeur de huit bits. Dans le cas illustré par la figure 4a, TAB_MSQ contient 20 valeurs de 8 bits. Ces valeurs représentent 20 combinaisons possibles de l'état des huit bandes, c'est-à-dire 20 masques. Pour les trois premiers masques, 4 bandes sur 8 sont opaques, de sorte que l'image d'une empreinte à travers l'afficheur ne sera qu'à moitié visible. Pour le dernier masque, seule une bande est transparente. La valeur du numéro de sélection de masque NUM peut être extraite d'un compteur ou d'un générateur de nombre aléatoire de la carte.

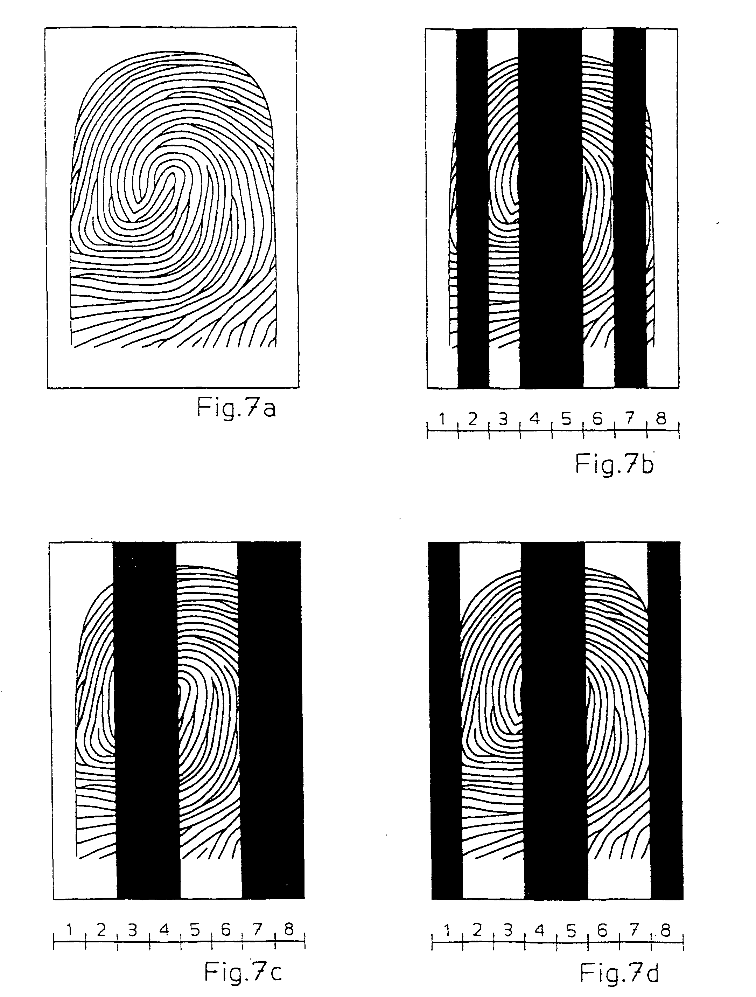

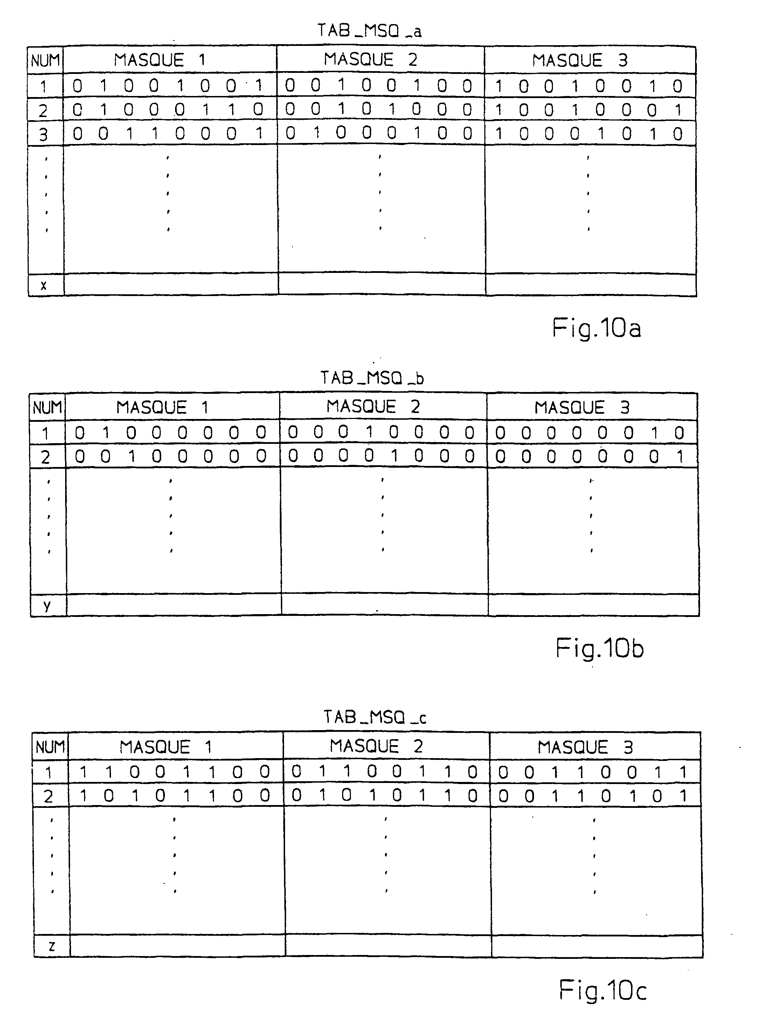

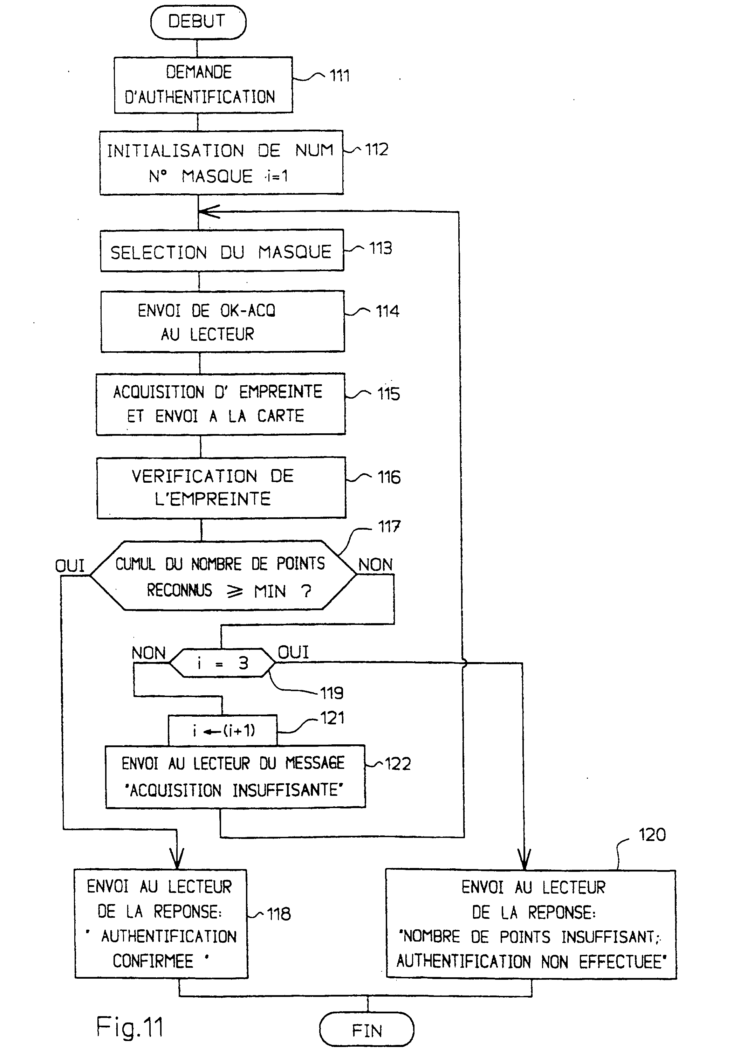

Les figures 7a, 7b, 7c, 7d montrent l'aspect d'une empreinte digitale à travers l'afficheur de la présente invention, telle que le capteur du lecteur 40 la voit. Sur les figures 7b à 7d, les huit bandes de l'afficheur sont repérées par un numéro d'ordre 1 à 8. La figure 7a montre la totalité de l'empreinte, la valeur du masque correspondant étant « 11111111 ». La figure 7b montre la même empreinte se superposant avec le masque N°1 enregistré dans le tableau de masques TAB_MSQ dont la valeur est « 10100101 » : les bandes 2,4,5 et 7 sont donc opaques. Les figures 7c et 7d montrent respectivement l'image partielle de la même empreinte obtenue avec les masques N°2 et 3 de TAB_MSQ.

Une fois la carte 8 glissée à fond dans le lecteur 40, elle est mise sous tension à l'aide des plages de contact 21. Le lecteur possède un programme d'authentification bio-métrique pour gérer une procédure d'authentification avec la carte. A l'aide d'un message optique ou vocal, il invite le porteur à mettre son doigt sur l'afficheur à cristaux liquides 17 de sa carte.

Le séquencement de la procédure d'authentification est illustré par la figure 5. A l'étape 51, le lecteur démarre la procédure en envoyant une demande d'authentification, par une commande spécifique, à la carte. Cette dernière initialise la valeur du numéro de sélection de masque NUM, à l'étape 52 . Dans tous les cas, sa valeur n'excède pas 20. A l'étape 53, les moyens de traitement de la carte vont chercher dans le tableau de masques TAB_MSQ la valeur de l'octet correspondant à la valeur de NUM sélectionnée. Cette valeur d'octet est fournie au circuit de gestion d'afficheur 16 (figure 1), de sorte que le masque correspondant apparaît sur l'afficheur à cristaux liquides. La carte avertit ensuite le lecteur qu'il peut effectuer une acquisition de l'empreinte (étape 54), en lui envoyant une réponse « OK-ACQ ». A partir de l'envoi de « OK-ACQ », la carte lance une temporisation de durée t.

A l'étape 55, le lecteur effectue une acquisition de l'image d'empreinte d'un doigt du porteur de carte, posé sur le capteur, à travers l'afficheur à cristaux liquides. Avantageusement, le lecteur effectue un premier traitement des données d'image issues du capteur. Par exemple, en utilisant la technique de reconnaissance des points d'intersection des sillons, le lecteur calcule la position desdits points. Cette position est définie sous la forme de deux coordonnées (x, y), l'abscisse et l'ordonnée. Ces coordonnées sont calculées à partir de l'origine d'un repère défini par le lecteur. Comme les cartes sont positionnées toujours de la même façon dans le lecteur, les bandes de l'afficheur occupent toujours les mêmes coordonnées. Mais, à chaque acquisition d'empreinte, la position du doigt bouge. Les coordonnées des points d'intersection dans le repère défini par le lecteur ne sont donc plus les mêmes. Le lecteur envoie ensuite à la carte les coordonnées (x, y) des points résultant de l'acquisition et du premier traitement. Si la temporisation t définie par la carte s'est écoulée, cette dernière peut suspecter une tentative de fraude. En effet, ce dépassement de la temporisation peut signifier qu'un fraudeur est en train d'analyser la position des bandes opaques et transparentes, et calcule des données d'image pour simuler une empreinte authentique. Dans ce cas, la procédure saute à l'étape 56, où la carte se bloque : elle peut éventuellement envoyer avant un message d'erreur au lecteur.

Si la temporisation est respectée, on parvient à l'étape 57, où la carte analyse les coordonnées des points reçus par le lecteur et vérifie que ceux-ci ne se trouvent pas dans une zone masquée par une bande opaque du masque. Supposons que le capteur a une précision de 100 pixels sur 150 : les valeurs de x varient de 0 à 99, et celles de y, de 0 à 149. Les bandes étant longitudinales, les points masqués par l'une d'entre elle sont tous les points dont l'abscisse (x) est compris entre deux valeurs déterminées. La première bande concerne tous les points dont x est compris dans l'intervalle [0,12], la seconde, les points dont x est compris dans l'intervalle [13,25], ...etc. La carte connaît les bandes rendues opaques : elle peut donc vérifier que le lecteur ne lui envoie pas des points situés sous des bandes opaques. Si cela arrive, la carte peut suspecter une tentative de fraude consistant à envoyer une empreinte enregistrée lors d'une précédente authentification. Une autre cause est la défaillance de l'afficheur.

Pour s'affranchir de certaines imprécisions dues à l'acquisition, le blocage intervient lorsqu'un nombre « k » de points normalement cachés sont reconnus par la carte. Ce nombre est inscrit dans une zone programmable de la mémoire non volatile, par exemple lors de la personnalisation de la carte par un organisme habilité. Si on veut un maximum de sécurité, quitte à bloquer des cartes par erreur, k est égal à 1. Si à l'inverse, on veut inhiber cette fonction de blocage, on peut fixer k à 50 par exemple.

Si le nombre k est atteint, la carte est alors bloquée (étape 58) et un message du type « blocage carte ; empreinte suspecte » est envoyée au lecteur. La carte écrit dans sa mémoire non volatile un bit de blocage. On peut imaginer que, comme pour une carte bancaire, l'autorité qui peut la débloquer est celle qui l'a mise en circulation.

Si ce nombre k n'est pas atteint, on peut prévoir, avant d'effectuer la vérification de l'empreinte, de produire une écriture en mémoire de la carte pour enregistrer un bit d'accès. Les caractéristiques électriques et temporelles des signaux relatifs à cette écriture sont alors choisies identiques à celles du bit de blocage décrit à l'étape 56, ceci de façon qu'un fraudeur ne puisse pas distinguer laquelle des deux alternatives de l'étape 57 a été choisie par la carte.

A l'étape 59, la carte vérifie donc l'empreinte captée en comparant les données transmises par le lecteur aux coordonnées de l'empreinte de référence, stockées en zone secrète programmable de sa mémoire non volatile. Cette comparaison s'effectue par approximations successives. Elle consiste à analyser les positions relatives des points d'empreinte en s'affranchissant du repère. A la fin de ce traitement, un nombre « N » de points sont reconnus identiques. On a décrit précédemment qu'une authentification est effective à partir de la reconnaissance de 10 points. La carte analyse à l'étape 591 le nombre de points reconnus en le comparant à une valeur minimale MIN, égale à 10 dans cet exemple. Si ce nombre est inférieur à MIN, le programme saute à l'étape 592. La carte envoie alors au lecteur le message « nombre de points insuffisant ; authentification non effectuée » : l'authentification n'est pas effectuée, et l'accès à toute zone mémoire de la carte, subordonnée à la bonne présentation de l'empreinte digitale, n'est pas autorisé. Si en revanche , le nombre de points reconnus identiques est supérieur ou égal à MIN, l'authentification est confirmée et un message correspondant est envoyé au lecteur (étape 593).

En variante, le traitement susmentionné des données d'image par le lecteur pour en tirer des coordonnées (x, y) directement exploitables par la carte (étape 55) sera effectué par la carte elle-même : dans ce cas, elle recevra directement les données d'image en provenance du capteur.

De la précédente description, il découle que les signaux résultant de l'acquisition de l'empreinte digitale sont fonction du numéro de sélection de masque NUM calculé par la carte. Un fraudeur qui aurait enregistré les signaux d'une précédente opération d'authentification ne pourrait s'authentifier car la valeur de NUM évolue de sorte que les valeurs attendues par la carte évoluent aussi. Il serait même découvert dès la première fraude.

La présence de la carte entre le doigt de l'utilisateur et le capteur optique présente d'autres avantages. Tout d'abord, le procédé augmente le niveau de sécurité. Dans les dispositifs classiques où le doigt de l'usager est posé directement sur le capteur optique, il reste toujours une trace d'empreinte sur celui-ci. Un fraudeur pourrait donc relever l'empreinte et éventuellement la reproduire. Dans le dispositif de l'invention au contraire, le doigt n'est jamais en contact avec le lecteur : il n'y a donc aucune trace restant sur le lecteur après l'authentification. De plus, cet agencement permet d'éviter le transfert de maladie entre usagers. Enfin, il permet d'éviter l'encrassement du capteur par la saleté déposée éventuellement par le doigt de l'utilisateur.

En variante, l'afficheur peut présenter un autre aspect que des bandes. Les figures 5a, 5b, 5c, 5d montrent des motifs correspondant à des zones de forme quelconque, comme par exemple des zones rectangulaires. Dans l'exemple illustré par les figures 5b, 5c, 5d, trois masques sont définis, tels que chacune des zones opaques correspond au deux tiers de l'image totale. Il faut juxtaposer les trois images partielles définies par ces masques pour reconstituer l'image totale de l'empreinte. Cette caractéristique n'est pas essentielle, les zones opaques pouvant se recouper.

Dans certains cas particuliers, il pourrait se faire que le masque recouvre la majorité des points d'intersection des sillons de l'empreinte ; le risque serait alors qu'il n'y ait pas assez de points d'intersection pour authentifier correctement l'empreinte. Une variante à la présente invention consiste à effectuer plusieurs acquisitions d'empreinte avec, chaque fois, élaboration d'une nouvelle image partielle.

Pour cela, comme le montre la figure 10a, on rajoute plusieurs colonnes au tableau TAB_MSQ_a. Pour une ligne déterminée, les valeurs extraites des différentes colonnes représentent les données d'image correspondant à différents masques 1, 2, 3 définissant chacun une image partielle telle que la somme des trois images partielles soit égale à l'image totale. Dans le tableau TAB_MSQ_a, on peut noter que , pour chaque valeur, trois bits sur huit ont la valeur « 1 », ce qui signifie qu'environ un tiers de l'image d'empreinte est découvert. Au total, ce tableau contient un nombre x de lignes, fonction du nombre de combinaisons possibles de trois bits parmi huit.

Ainsi, s'il s'avère que le masque 1 recouvre un nombre trop important de points pour réaliser une authentification significative, les moyens de traitement de la carte décideront d'utiliser le masque complémentaire 2 qui ne peut masquer les points masqués par le masque 1. Si cela est encore insuffisant, ils utiliseront le masque 3. Dans de dernier cas, la totalité de l'empreinte est acquise et envoyée à la carte , les points acquis étant donc envoyés en trois lots consécutifs.

La figure 11 montre un organigramme pour effectuer une authentification bio-métrique en utilisant le tableau TAB-MASQ de la figure 10a. A l'étape 111, le lecteur demande à la carte une authentification par empreinte digitale. La carte, à l'étape 112, met à « 1 » dans sa mémoire de travail une variable « i » représentant un numéro de masque et calcule la valeur de NUM ce qui détermine le choix de la valeur de masque. Par exemple, si NUM=1, la valeur de masque est 01001001.

Ensuite interviennent des étapes déjà décrites en relation avec la figure 5 et comprenant l'étape 113 de sélection de la valeur de masque et l'affichage du masque correspondant, l'étape 114 d'envoi du message OK-ACK au lecteur, l'étape 115 d'acquisition d'empreinte et d'envoi de celle-ci à la carte, éventuellement une étape non représentée de vérification du nombre de points masqués (voir étape 57, figure 5), l'étape 116 de vérification de l'empreinte, et l'étape 117 de comparaison du nombre de points reconnus avec une valeur minimale MIN. Comme cela apparaîtra ci-après, le nombre de points reconnus est éventuellement un cumul de points acquis dans plusieurs acquisitions successives.

Si la valeur minimale MIN est atteinte ou dépassée, l'étape 118 consiste à envoyer un message « authentification confirmée » au lecteur. Dans la négative, on parvient à l'étape 119 où l'on vérifie que le numéro de masque 3 n'est pas encore atteint. S'il est atteint, on arrive à l'étape 120 où la carte envoie au lecteur le message « nombre de points insuffisant, authentification non effectuée ». Si le numéro de masque 3 n'est pas atteint, on parvient à l'étape 121 où l'on incrémente le numéro de masque i d'une unité, de façon à utiliser un autre masque disponible : ici, ce numéro serait égal à 2. A l'étape suivante 122, la carte envoie au lecteur le message « acquisition insuffisante » pour avertir le porteur de carte que le lecteur va avoir à exécuter une nouvelle acquisition. On retourne alors à l'étape 113, où la carte sélectionne un nouveau masque, portant le nouveau numéro i. Les étapes suivantes sont exécutées jusqu'à atteindre l'étape 117 où la carte ajoute les nouveaux points de l'empreinte reconnus, à ceux déjà reconnus dans l'acquisition précédente, les éventuels points communs aux acquisitions déjà effectuées n'étant donc pris en compte qu'une fois. La procédure prend fin, selon les cas, à l'étape 118 ou 120.

La stratégie d'élaboration des valeurs de masque dépend du degré de sécurité désiré, de la précision de l'afficheur, et peut aussi dépendre de l'empreinte elle-même, c'est-à-dire de l'individu concerné. Les trois masques complémentaires 1 à 3 du tableau TAB_MSQ peuvent se recouper parfaitement sans avoir de zones communes (tableau TAB-MSQ_a de la figure 10a). Ils peuvent exclure totalement certaines zones qui restent opaques quelque soit le masque, comme cela apparaît sur la figure 10b : à la ligne 1, les bits de rang 1,3,5,6,8 sont à zéro, quelque soit le masque sélectionné, de sorte que l'afficheur présentera toujours des bandes opaques aux endroits correspondants. Cette stratégie est utilisable si l'empreinte digitale possède beaucoup (par exemple, plus de 50) points d'intersection : il est alors possible et utile de réduire le nombre de points transmis à la carte, afin de limiter les dommages dus à un prélèvement frauduleux d'un trop grand nombre de points de l'empreinte. Les zones du masque peuvent enfin se chevaucher uniquement sur les bords, ceci pour éliminer des incertitudes lors de la reconnaissance des points situés exactement sur une ligne d'intersection de deux zones : c'est le cas de la figure 10c, ligne 1, où le bit de rang 2 est commun aux masques 1 à 3, le bit de rang 6 est commun aux masques 1 et 2, et le bit de rang 7 est commun aux masques 2 et 3.

Une amélioration de la présente invention consiste à doter le lecteur de carte 40 de la figure 4 d'une trappe escamotable masquant le capteur dans une position fermée et protégeant celui-ci. La trappe est située au-dessus du capteur de telle façon qu'elle s'étende sous l'afficheur de la carte lorsque celle-ci est présente. Avant l'introduction de la carte, la trappe est fermée et le capteur est ainsi protégé des poussières et des atteintes dues au vandalisme. Le porteur de carte fait glisser sa carte sur la trappe, jusqu'à ce que les plages de contact 21 coopèrent avec le lecteur. Un interrupteur fin de course détecte la présence de la carte et déclenche l'alimentation électrique de celle-ci. Une authentification de la carte est alors effectuée. Elle met en oeuvre une clé secrète stockée dans la zone secrète 11 de la mémoire non volatile 10 de la carte. Le lecteur peut ainsi s'assurer qu'il a affaire à une carte authentique. Avantageusement, cette procédure d'authentification peut être réalisée à l'aide d'un algorithme asymétrique, mettant en oeuvre une clé publique stockée dans le lecteur et une clé secrète stockée dans la carte.

Si l'authentification est réussie, le lecteur ouvre la trappe qui masque le capteur d'acquisition de l'empreinte. La trappe coulisse, laissant apparaître le capteur. L'acquisition peut alors s'effectuer à l'aide du procédé précédemment décrit. Si l'authentification n'est pas réussie, le terminal interrompt la communication et demande au porteur de retirer la carte. Il est en effet inutile de vouloir authentifier le porteur par son empreinte si la carte n'est pas authentique.

Selon une autre application de l'invention, la carte à afficheur transparent décrite précédemment est capable de recevoir des données d'image en provenance d'un dispositif émetteur distant et de les appliquer sur l'afficheur afin que l'on puisse projeter l'image correspondante sur un écran. La figure 9 illustre un projecteur 91 adapté à cette fonction. Il s'apparente à un projecteur de diapositives et comprend une partie lecteur de carte 92 correspondant au dispositif de traitement de l'information 1 de la figure 1 et présentant une fente 93 par laquelle une carte 94 coopère avec la partie lecteur en laissant à découvert son afficheur 95. Le projecteur 91 comprend encore une partie projecteur 96 incluant une source de lumière blanche 97 disposée en face de l'afficheur 95 de la carte pour projeter sur un écran 98 une image agrandie d'une image présente sur l'afficheur 95. La partie projecteur 96 comprend encore des moyens optiques de focalisation connus en eux-mêmes et non représentés.

L'afficheur à cristaux liquides 95 doit posséder une excellente résolution. Un exemple est un afficheur LCD (de l'anglais Liquid Cristal Display) à matrice active couleur, constitué de silicium polycristallin et possédant 640 par 200 pixels, soit 128000 pixels. Un tel afficheur possède une surface d'environ un centimètre carré et demi. L'affichage des images en mouvement est également possible. Les constructeurs proposent en effet des afficheurs LCD possédant un temps de réponse de 150 milli-secondes et annoncent pour très bientôt une réduction de ce temps à 80 milli-secondes. De telles vitesses autorisent la visualisation de véritables émissions cinématographiques avec un confort correct pour le spectateur.

La deuxième application de l'invention est décrite ci-après dans une utilisation préférée selon laquelle les données d'image sont protégées par chiffrement pendant leur transmission. La procédure comprend une première phase dans laquelle des images sont conçues dans un dispositif émetteur situé dans un environnement sécurisé. Ces images, mises sous forme de données numériques, sont chiffrées au moyen d'un algorithme de chiffrement symétrique ou dissymétrique, et d'une clé de chiffrement détenus par le dispositif émetteur. Les données d'image peuvent être de type « point par point » ou codées à l'aide d'algorithme de compression d'images. Puis, les données chiffrées sont émises sur une ligne de communication non protégée, par liaison radio par exemple.

La procédure comprend une seconde phase dans laquelle la carte déchiffre les données d'image chiffrées, reçues du dispositif émetteur. La carte possède, dans sa mémoire non volatile 10, un algorithme de déchiffrement corrélé à l'algorithme de chiffrement du dispositif émetteur , et une clé de déchiffrement associée, stockée dans la zone secrète 11. Les moyens de traitement de la carte doivent être capables de déchiffrer en ligne les données reçues du dispositif émetteur : avantageusement, ils peuvent être constitués par un microprocesseur de type RISC, manipulant des données de 32 bits. Les données d'image déchiffrées sont transmises par les moyens de traitement 9 de la carte au circuit de gestion d'afficheur 16 pour être affichées sur l'afficheur 17 : elles sont alors projetées sur l'écran 98.

Une telle application peut par exemple servir à des journalistes en mission. Ceux-ci possèdent une caméra dotée d'un capteur CCD (de l'anglais Charge-Coupled Device) capable de transformer des images en données numériques. La caméra est également dotée d'un module de sécurité dont le circuit est, sur le plan de la sécurité, du même type que celui de la puce 15 de la carte de la figure 1, à l'exclusion du circuit de gestion d'afficheur 16. Le module de sécurité chiffre les données à l'aide d'un algorithme et d'une clé de chiffrement. Les données chiffrées sont envoyées par radio à une agence de rédaction à laquelle appartient le journaliste. La carte contenant la clé de déchiffrement correspondante est introduite dans le projecteur 91 et un programme de déchiffrement des images est lancé. Le déchiffrement peut parfaitement s'effectuer en différé : pour cela, il suffit d'enregistrer les données chiffrées sur un magnétoscope. L'invention permet de ne déchiffrer l'image qu'au dernier moment, c'est-à-dire lors de la formation de l'image sur l'écran 98. La clé de déchiffrement étant uniquement dans la carte, seule celle-ci est capable de déchiffrer l'image. La confidentialité et l'authenticité de la transmission d'image sont ainsi assurées. De plus, la carte contrôle parfaitement la reproduction de l'image. Par exemple, la carte peut contenir un compteur qui ne va autoriser la reproduction des images qu'un nombre limité de fois.

Avantageusement et de façon connue en soi, toute session de chiffrement/déchiffrement fait intervenir un aléa échangé entre le dispositif émetteur et la carte de façon que des données d'image transmises durant une session déterminée ne puissent pas être déchiffrées lors d'une autre session..

Cette deuxième application de l'invention peut aussi servir à afficher sur un écran des oeuvres d'art ou des images de synthèse provenant d'un réseau. Par exemple, le projecteur 91 est utilisé au domicile d'un particulier pour agrémenter une soirée, celui-ci ayant acheté auprès d'un fournisseur la possibilité de visualiser une centaine d'oeuvres d'art. Le particulier se connecte à un réseau, l'Internet par exemple, et introduit sa carte 94 dotée de l'afficheur à cristaux liquides 95. Au cours de la soirée, les images se succèdent sur l'écran 98, par exemple toutes les deux minutes, et permettent ainsi d'agrémenter une rencontre entre amis. Avantageusement, la carte contient un moyen de paiement ou d'abonnement pour obtenir facilement ce service sur le réseau.

Les documents transmis confidentiellement peuvent aussi être des images telles que des plans, des graphiques, des images vidéo de réunions. Au départ, un dispositif émetteur élabore ces images sous forme digitale, soit à l'aide d'une caméra, soit avec une unité de traitement graphique. Les images sont numérisées et compactées à l'aide d'un algorithme et d'une clé secrète puis envoyées par un moyen de transmission quelconque. Seul, le projecteur 91 équipé de la carte contenant la clé de déchiffrement correspondante peut décompacter et déchiffrer l'image de départ, puis l'afficher. Le projecteur 91 est par exemple utilisé dans une téléconférence.

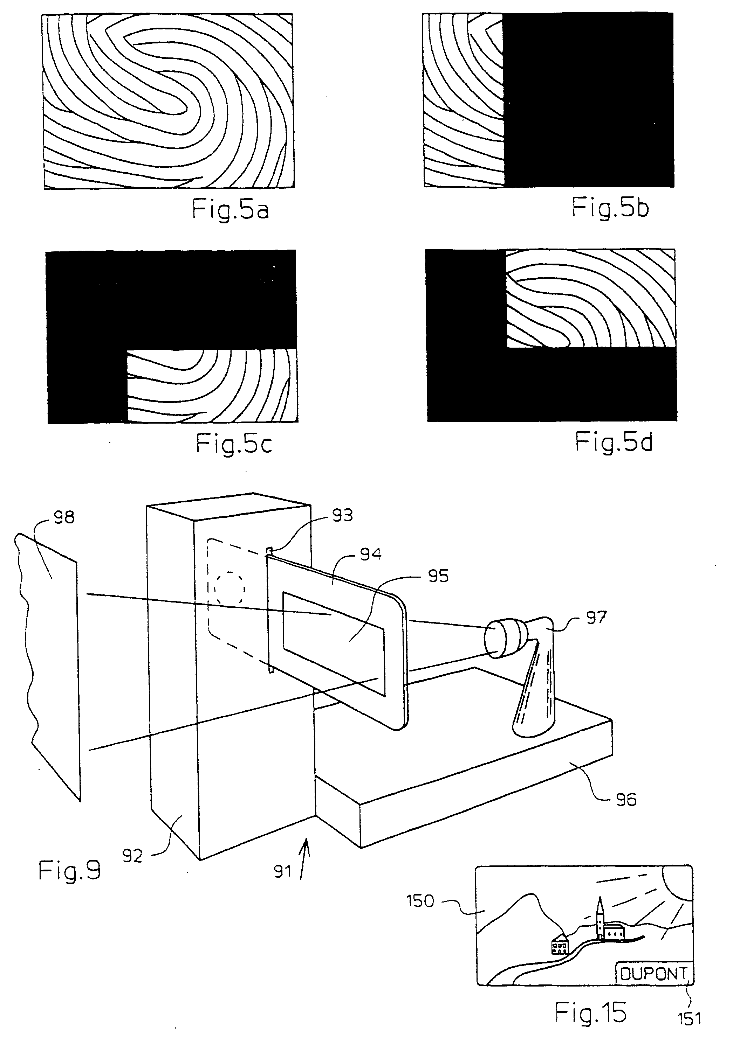

Avantageusement, et comme représenté sur la figure 15, les moyens de traitement de la carte superposent à l'image 150 une « identité visuelle 151 » au moment de la conversion des données d'image en image. Cette identité visuelle est un symbole caractéristique de la carte ou de son propriétaire : elle peut être un numéro, un mot alphabétique (par exemple, le nom et le prénom du propriétaire), un dessin, ou un logo. Cette identité ne varie pas et est placée toujours à la même position sur l'image , par exemple en bas à droite de l'image, à la façon des logos de chaînes de télévision lors de leurs émissions. L'identité visuelle 150 est une donnée écrite en zone secrète 11 de la mémoire non volatile de la carte, et le porteur de la carte ne peut en principe empêcher les moyens de traitement de superposer l'identité visuelle à l'image.

L'avantage d'utiliser un tel système est d'éviter la copie et la reproduction des images par des personnes non habilitées. Indépendamment de l'utilisation de cette identité visuelle, la miniaturisation de l'afficheur et de ses connexions rend déjà difficile cette copie ou reproduction. L'identité visuelle rend toutefois encore plus difficile la tâche du fraudeur. En effet, si le fraudeur cherche à réaliser une photo de l'écran 98, l'identité visuelle apparaîtra sur la photo. Il sera alors facile de connaître la provenance de l'image illicitement reproduite. Si par ailleurs le fraudeur efface l'identité visuelle, il restera dans l'image une zone 151 formant un « trou » : ce trou sera une preuve que l'image a été illégalement reproduite.

En variante à cette deuxième application de l'invention , les données d'image sont transmises à la carte par le dispositif émetteur sous une forme non chiffrée, soit que ces données sont jugées non confidentielles, soit que la ligne de transmission utilisée est sécurisée.

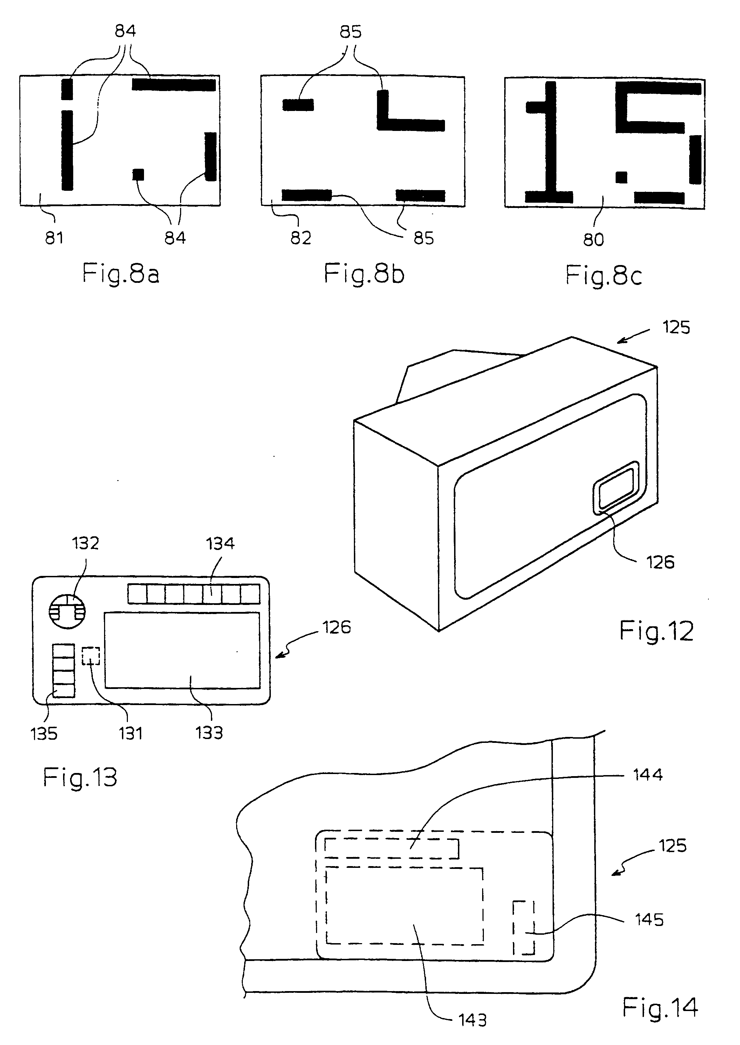

Une autre application de l'invention consiste à produire une image à partir de deux images partielles se complétant par superposition, l'une étant par exemple affichée sur un écran à tube cathodique 125 (figure 12) et l'autre sur l'afficheur d'une carte 126, la carte étant appliquée contre l'écran 125, par exemple dans un angle inférieur droit au moyen d'un étui transparent collé contre l'écran et dans lequel est glissée la carte.

A cet effet, une carte de constitution particulière est utilisée, comme le montre la figure 13. Elle comprend , comme celle de la figure 2, une puce 131, éventuellement des plages de contact 132, un afficheur 133, une barre de cellules photovoltaïques 134 pour recevoir de l'énergie électrique par voie optique. Elle comprend en plus une barre de cellules photoélectriques 135 destinées à recevoir un signal électrique par voie optique. En variante, les deux barres de cellules 134,135 sont regroupées en une seule barre. Le document US-A-5.299.046 enseigne un circuit possédant des photodiodes capables de recevoir à la fois de l'énergie électrique et un signal électrique par voie optique. Par ailleurs, l'écran 125 possède, dans son angle inférieur droit (figure 14) destiné à recevoir la carte 126, trois zones spécifiques d'émission 143 à 145, de dimensions correspondant respectivement à celles de l'afficheur 133 et des barres de cellules 134 et 135. La zone 143 est agencée pour pouvoir afficher une image partielle d'écran destinée à être complétée par une autre image partielle de carte, comme précisé ci-après. La zone 144 est agencée pour émettre une lumière blanche apte à fournir de l'énergie électrique à la barre de cellules photovoltaïques 134 de la carte. Enfin, la zone 145 est agencée pour émettre une succession de flash de lumière blanche ou noire (selon le document US-A-5.299.046) aptes à transmettre un signal électrique représentatif de données à la barre de cellules photoélectriques 135 de la carte.

La figure 8a illustre un exemple d'image partielle d'écran 81 et la figure 8b une image partielle de carte 82 consistant chacune en une partie d'une image totale 80 (figure 8c), laquelle représente le nombre « 15 » en zones sombres sur fond clair. L'image partielle d'écran 81 comporte plusieurs morceaux d'image 84, et l'image partielle de carte 82 comporte plusieurs morceaux d'image 85 qui sont différents et complémentaires de ceux 84 de l'image partielle d'écran 81 : on constate que la superposition des deux images partielles 81,82 permet de retrouver l'image totale 80. Dans cet exemple, chaque morceau d'image est lui-même un sous-ensemble de points de l'image totale 80.

La constitution des deux images partielles 81,82 peut s'effectuer de la façon suivante. L'image totale comprenant n points ou pixels $(x_i , y_i)$ formant un ensemble $\Sigma(x_i , y_i)$ où $\Sigma$ est un symbole désignant l'opération « somme », on effectue un tirage aléatoire de p points parmi n pour constituer un sous-ensemble $\Sigma( x_i , y_i)$ représentant l'image partielle d'écran 81, le sous-ensemble $\Sigma(x_k , y_k)$ de q points restants, où q = n - p, représentant l'image partielle de carte 82. Avantageusement, le nombre p est voisin de q de façon que chaque image partielle soit constituée d'environ la moitié des points n de l'image totale 80.

Un exemple d'utilisation de la deuxième application de l'invention , décrite en regard des figures 8a à 8c et 12 à 14, est maintenant exposé. Dans le cadre d'un jeu télévisé réalisé en direct avec des millions de téléspectateurs regardant des écrans de télévision respectifs 125, un organisme émetteur du jeu télévisé demande aux téléspectateurs de répondre à des questions. Une façon de formuler une réponse à chacune des questions d'un ensemble de dix questions consiste par exemple à sélectionner un chiffre de 0 à 9, l'ensemble des réponses formant donc un nombre de dix chiffres déterminé. A la fin du jeu, l'organisme émetteur transmet par voie hertzienne à chaque écran de téléspectateur une image partielle d'écran consistant par exemple en une première partie non directement lisible d'un numéro de téléphone à appeler, tout gagnant potentiel devant appeler ce numéro pour se faire connaître. L'image partielle d'écran s'affiche alors sur la zone 143 de l'écran. L'organisme émetteur transmet aussi par voie hertzienne sur la zone 145 de chaque écran de téléspectateur des données d'image partielle de carte qui sont transmises à chaque carte de téléspectateur 126, lorsque celle-ci est appliquée contre l'écran 125 : ces données d'image partielle de carte correspondent à une seconde partie dudit numéro de téléphone à appeler ; ces données sont chiffrées chez l'organisme émetteur au moyen d'un algorithme de chiffrement, et d'une clé de chiffrement S constituée par ledit nombre de dix chiffres représentant la réponse aux dix questions.

Pour être exploitables, ces données d'image partielle de carte doivent donc être déchiffrées par les moyens de traitement de la carte 126 du téléspectateur, au moyen d'un algorithme de déchiffrement et d'une clé de déchiffrement égale à ladite clé de chiffrement S. A cet effet, la clé de chiffrement S est fournie à la carte par le téléspectateur de la façon suivante : soit la carte possède un clavier pour entrer des données (voir document EP-A-0.167.044 précité), auquel cas le téléspectateur entre la clé S au clavier ; soit la carte ne possède pas de clavier, auquel cas elle est insérée dans un lecteur de carte permettant d'entrer ces données dans la mémoire non volatile de la carte , puis celle-ci est appliquée à nouveau contre l'écran 125.

Après déchiffrement , les moyens de traitement de la carte font afficher par l'afficheur 133 l'image partielle de carte correspondant à la seconde partie dudit numéro de téléphone à appeler : alors, l'image partielle d'écran et l'image partielle de carte se complètent pour former une image complète du numéro de téléphone à appeler, maintenant lisible par ceux des téléspectateurs qui ont répondu correctement aux dix questions posées.

En variante à l'exemple précédent, l'image partielle de carte envoyée par un émetteur à la carte pourra être chiffrée au moyen d'une clé de chiffrement dont une clé de déchiffrement correspondante (éventuellement identique à la clé de chiffrement ) a été installée dans la zone secrète.11 (figure 1) de la mémoire non volatile de la carte par un organisme émetteur de cartes : lors du déchiffrement par la carte , celle-ci utilisera sa clé de déchiffrement, lue en mémoire.

Selon une autre variante, l'image partielle de carte envoyée par un émetteur à la carte n'est pas chiffrée. Les données d'image partielle de carte sont dans ce cas seulement protégées, durant leur transmission à la carte , par le caractère aléatoire selon lequel l'image totale est décomposée en une image partielle d'écran et une image partielle de carte.

Dans le cas où l'image partielle de carte est compactée avant envoi à la carte par un algorithme de compactage, un algorithme de décompactage correspondant est avantageusement stocké dans la zone secrète.11 (figure 1) de la mémoire non volatile de la carte, de façon à décompacter l'image partielle de carte reçue par la carte , avant de l'afficher sur l'afficheur.

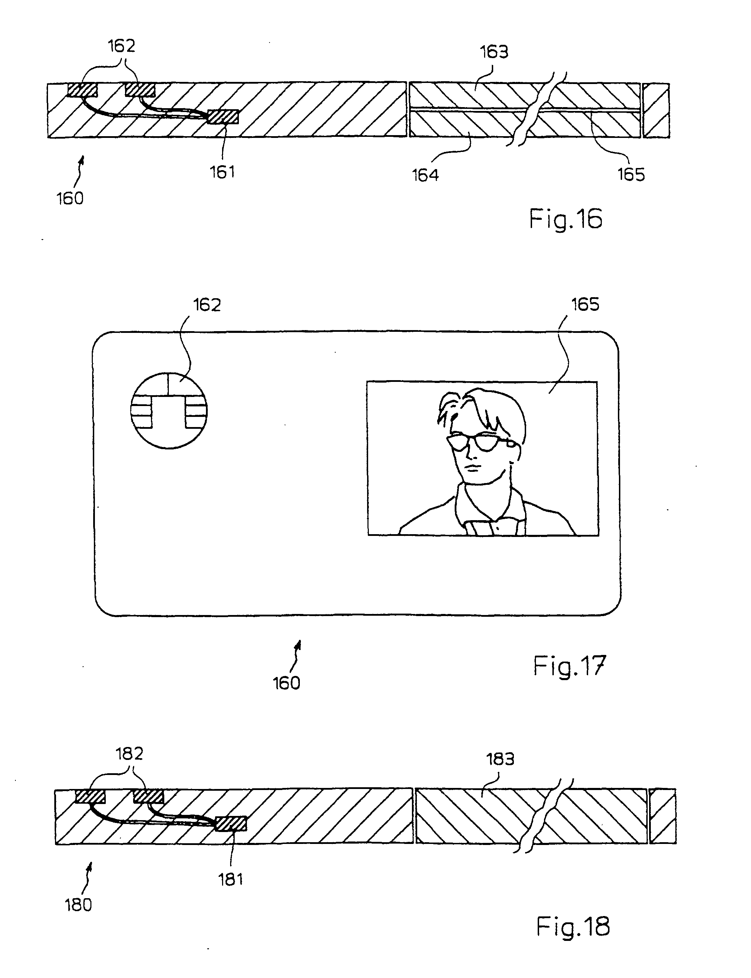

Selon une autre forme de réalisation de l'invention conforme aux figures 16 et 17, la carte à puce 160 comporte, comme la carte 8 des figures 1 à 3, une puce 161 reliée à des contacts 162. La puce 161 diffère de celle 15 des figures 1 à 3 en ce qu'elle n'inclut pas de circuit de gestion d'afficheur. La carte n'incorpore pas d'afficheur, mais deux couches transparentes 163,164 qui s'étendent chacune sur une demi-épaisseur de la carte et forment une fenêtre traversante. Les couches transparentes 163,164 sont notamment en matière plastique.

Entre les deux couches transparentes 163,164, est interposé un film support d'image 165 qui s'étend sur toute la longueur des couches transparentes 163,164 : il est constitué d'une diapositive ou de tout support équivalent susceptible d'être disposé devant un projecteur de lumière pour projeter une image agrandie sur un écran. En l'espèce, l'image est un portrait d'usager.

En variante, il est prévu une seule couche transparente dont l'épaisseur est égale à celle de la carte et dans laquelle est noyé le film support d'image 165.

Une utilisation typique de la carte 160 est celle dans laquelle un usager porteur de cette carte souhaite avoir accès à un service ou à un lieu. A cet effet, il insère sa carte dans un projecteur analogue à celui 91 de la figure 9 , destiné à coopérer avec la puce 161 et comprenant pour cela une partie lecteur de carte et une partie projecteur. Le projecteur vérifie d'abord que la carte est authentique , c'est-à-dire qu'elle a bien été émise par un organisme autorisé. Pour cela et selon une procédure d'authentification classique, il envoie à la carte un signal déterminé, auquel la carte , si elle est authentique , doit répondre par un autre signal déterminé qu'il vérifie alors. Une procédure de ce genre est décrite dans la norme ISO7816-3. Si le signal renvoyé par la carte est correct, le projecteur invite l'usager à entrer sur un clavier un code d'usager ou P.I.N. qu'il envoie à la carte pour que celle-ci le compare avec un code d'usager de référence. Si le code d'usager est déclaré bon par la carte, un opérateur consulte un écran du projecteur sur lequel est projeté le portrait de l'usager et le compare au visage de l'usager qui se présente devant lui. En cas de concordance, l'opérateur accorde l'accès au service ou au lieu demandé.

En variante, l'utilisation du portrait de l'usager est faite en association avec une procédure de chiffrement ou de signature de message, la carte 160 contenant à cet effet, dans la zone secrète de sa mémoire non volatile, une clé secrète. Tout d'abord, la carte est insérée dans un projecteur comprenant une partie lecteur de carte et une partie projecteur, l'opérateur effectuant une reconnaissance visuelle de l'usager, en utilisant le portrait projeté sur un écran. En cas de concordance entre le visage de l'usager et le portrait, l'opérateur autorise les procédures de chiffrement ou de signature de message utilisant ladite clé secrète.

Selon une autre forme de réalisation de l'invention conforme à la figure 18, la carte à puce 180 comprend, comme celle des figures 16,17 une puce 181 reliée à des contacts 182. Elle en diffère en ce qu'elle comporte une couche transparente 183 n'incorporant pas de film support d'image : cette couche ne constitue donc qu'une fenêtre traversante.

Un exemple d'application de cette dernière forme de réalisation consiste à utiliser la carte 180 pour une procédure d'authentification d'empreinte digitale. La carte 180 coopère alors avec le lecteur de carte 40 de la figure 4, équipé d'une trappe escamotable, de façon que sa couche transparente 183 soit située en regard de la fenêtre de saisie d'empreinte du lecteur, avec interposition de la trappe. Le lecteur commence par effectuer une authentification de la carte , comme cela a déjà été décrit en relation avec la figure 4, basée sur une clé secrète stockée dans la zone secrète de la mémoire non volatile de la carte. En cas d'authentification positive, le lecteur ouvre la trappe. L'usager est alors invité par le lecteur à poser son doigt sur la couche transparente 183 de la carte et le lecteur effectue une acquisition de l'empreinte de l'usager, au travers de la couche transparente 183. Puis le lecteur envoie à la carte des données d'empreinte correspondant à cette acquisition, qui sont comparées dans la carte avec des données d'empreinte stockées, relatives à une empreinte de référence.

Ainsi, à la différence de la carte 8 de la figure 3, la fenêtre de la carte 180 n'intervient pas pour moduler une image d'empreinte au moyen d'un afficheur, mais seulement pour constituer une interface matérielle entre le doigt de l'usager et le capteur optique du lecteur, évitant, comme déjà mentionné précédemment, de laisser une empreinte sur le capteur, d'encrasser celui-ci, et de transmettre des maladies entre usagers.

## Revendications

1. Procédé pour produire une image déterminée au moyen d'un dispositif (40,91,125) et d'un objet portatif (8,94,126), le dispositif comprenant des moyens de traitement de l'information (2), des moyens de mémorisation de l'information (3,4), et des moyens de traitement d'image (18,97,125), et l'objet portatif comprenant des moyens de traitement de l'information (9), des moyens de mémorisation de l'information (10), une fenêtre traversante (32,33), et des moyens d'affichage (17) pouvant afficher une image devant la fenêtre, **caractérisé en ce qu'**il comprend les étapes consistant à :

   - disposer ladite fenêtre de l'objet portatif devant les moyens de traitement d'image (18,97,125) du dispositif de façon qu'ils coopèrent optiquement entre eux ;
   - produire devant ladite fenêtre une première image ;
   - faire afficher par les moyens d'affichage (17) de l'objet portatif une seconde image d'objet portatif ; et
   - obtenir ladite image déterminée par superposition de la première image et de la seconde image d'objet portatif.

2. Procédé selon la revendication 1, pour authentifier une image à authentifier en la comparant à une image de référence, dans lequel l'objet portatif est agencé pour afficher un masque de forme déterminée devant la fenêtre (32,33) et les moyens de traitement d'image du dispositif comprennent des moyens de prélèvement d'image(18), **caractérisé en ce qu'**il comprend les étapes consistant à :

   - disposer la fenêtre de l'objet portatif devant les moyens de prélèvement d'image du dispositif ;
   - faire afficher par les moyens d'affichage (17) de l'objet portatif un masque devant la fenêtre, tel qu'il masque une portion déterminée de la fenêtre ;
   - présenter une image à authentifier devant les moyens de prélèvement d'image de façon que la fenêtre soit interposée entre eux ;
   - faire prélever, par les moyens de prélèvement d'image, une information d'image à authentifier liée à une portion d'image à authentifier, telle que celle-ci apparaît au travers de la fenêtre, puis faire transmettre à l'objet portatif cette information d'image à authentifier; et

   - faire comparer par les moyens de traitement (9) de l'objet portatif ladite information d'image à authentifier avec une information d'image de référence, liée à une portion d'image de référence obtenue en utilisant le même masque et stockée dans les moyens de mémorisation (10) de l'objet portatif.

3. Procédé selon la revendication 2, dans lequel ledit masque est de forme aléatoire.

4. Procédé selon la revendication 2, consistant à définir plusieurs masques dont les formes respectives sont complémentaires, et à prélever successivement plusieurs informations d'image à authentifier obtenues respectivement en utilisant plusieurs desdits masques.

5. Procédé selon la revendication 2, dans lequel l'image déterminée est définie par un nombre déterminé de points d'image et le masque a une surface qui est fonction de ce nombre.

6. Procédé selon la revendication 1, dans lequel les moyens de traitement d'image du dispositif comprennent des moyens d'affichage (125), **caractérisé en ce qu'**il comprend les étapes consistant à :

   - décomposer ladite image déterminée (80) en une image partielle de dispositif (81) et une image partielle d'objet (82) constituant un complément de l'image partielle de dispositif ;
   - disposer la fenêtre (32,33) de l'objet portatif devant les moyens d'affichage du dispositif ;
   - faire afficher par les moyens d'affichage du dispositif ladite image partielle de dispositif (81);
   - faire transmettre par le dispositif à l'objet portatif une information d'image partielle d'objet correspondant à ladite image partielle d'objet (82) ; et
   - faire afficher par les moyens d'affichage de l'objet portatif ladite image partielle d'objet (82), en utilisant ladite information d'image partielle d'objet.

7. Procédé selon la revendication 6, dans lequel la décomposition de l'image déterminée (80) en une image partielle de dispositif (81) et une image partielle d'objet (82) est aléatoire.

8. Procédé selon la revendication 6, consistant à faire produire optiquement de l'énergie électrique et ladite information d'image partielle d'objet par les moyens d'affichage (125) du dispositif, et à utiliser un objet portatif (126) comportant au moins une cellule photoélectrique (134,135) pour recevoir l'énergie électrique et ladite information d'image partielle d'objet.

**9.** Procédé selon la revendication 6, consistant à faire chiffrer l'information d'image partielle d'objet (82) par le dispositif avant sa transmission à l'objet portatif, et à la faire déchiffrer par l'objet portatif après sa transmission.

**10.** Procédé selon la revendication 1, dans lequel les moyens de traitement d'image comprennent des moyens de projection de lumière (97), **caractérisé en ce qu'**il comprend les étapes consistant à :

- faite stocker par les moyens de mémorisation de l'objet portatif (94) une information d'image correspondant à une première image d'identité visuelle (151) ;
- faire transmettre par le dispositif à l'objet portatif une information d'image correspondant à ladite seconde image ; et
- faire commander les moyens d'affichage (17) par les moyens de traitement (9) de l'objet portatif, en fonction de ladite information d'image stockée et de ladite information d'image transmise, de façon à faire afficher ladite image déterminée devant la fenêtre traversante (32,33).

**Patentansprüche**

**1.** Verfahren zum Erzeugen eines bestimmten Bildes mithilfe einer Vorrichtung (40,91,125) und eines tragbaren Gegenstands (8,94,126), bei dem die Vorrichtung Datenverarbeitungsmittel (2), Datenspeichermittel (3,4) und Bildverarbeitungsmittel (18,97,125) umfaßt und der tragbare Gegenstand Datenverarbeitungsmittel (9), Datenspeichermittel (10), ein durchgehendes Fenster (32,33) und Anzeigemittel (17) zur Anzeige eines Bildes vor dem Fenster umfaßt, **dadurch gekennzeichnet, daß** es folgende Schritte umfaßt:

- Anordnen des besagten Fensters des tragbaren Gegenstands vor den Bildverarbeitungsmitteln (18,97,125) der Vorrichtung, sodass sie optisch miteinander zusammenwirken;
- Erzeugen eines ersten Bildes vor dem besagten Fenster;
- durch die Anzeigemittel (17) des tragbaren Gegenstands ein zweites Bild des tragbaren Gegenstands anzeigen lassen; und
- Erzielen des besagten bestimmten Bildes durch Überlagern des ersten Bildes und des zweiten Bildes des tragbaren Gegenstands.

**2.** Verfahren gemäß Anspruch 1 zum Authentifizieren eines zu authentifizierenden Bildes durch Vergleich mit einem Referenzbild, bei dem der tragbare Gegenstand zur Anzeige einer Maske bestimmter Form vor dem Fenster (32,33) angeordnet wird und die Bildverarbeitungsmittel der Vorrichtung Bildaufnahmemittel (18) umfassen, **dadurch gekennzeichnet, daß** es folgende Schritte umfaßt:

- Anordnen des Fensters des tragbaren Gegenstands vor den Bildaufnahmemitteln der Vorrichtung;
- durch die Anzeigemittel (17) des tragbaren Gegenstands eine Maske vor dem Fenster anzeigen lassen, sodass sie einen bestimmten Bereich des Fensters abdeckt;
- Präsentieren eines zu authentifizierenden Bildes vor den Bildaufnahmemitteln, sodass das Fenster zwischen ihnen zwischengelagert ist;
- durch die Bildaufnahmemittel zu authentifizierende Bilddaten in Verbindung mit einem zu authentifizierenden Bildausschnitt entnehmen lassen, sodass dieser Ausschnitt durch das Fenster erscheint und anschließend diese zu authentifizierenden Bilddaten an den tragbaren Gegenstand übertragen lassen; und
- durch die Verarbeitungsmittel (9) des tragbaren Gegenstands die besagten zu authentifizierenden Bilddaten mit Referenzbilddaten in Verbindung mit einem Referenzbildausschnitt vergleichen lassen, der durch Anwendung derselben Maske erzielt wird und in den Speichermitteln (10) des tragbaren Gegenstands gespeichert ist.

**3.** Verfahren gemäß Anspruch 2, bei dem die besagte Maske zufälliger Form ist.

**4.** Verfahren gemäß Anspruch 2, das darin besteht, mehrere Masken zu definieren, deren jeweilige Formen sich ergänzen, und nacheinander mehrere zu authentifizierende Bilddaten zu entnehmen, die jeweils unter Anwendung mehrerer der besagten Masken erzielt werden.

**5.** Verfahren gemäß Anspruch 2, bei dem das bestimmte Bild durch eine bestimmte Anzahl von Bildpunkten definiert ist und die Maske eine von dieser Anzahl abhängige Fläche aufweist.

**6.** Verfahren gemäß Anspruch 1, bei dem die Bildverarbeitungsmittel der Vorrichtung Anzeigemittel (125) umfassen, **dadurch gekennzeichnet, daß** es folgende Schritte umfaßt:

- Zerlegen des besagten bestimmten Bildes (80) in ein Vorrichtungsteilbild (81) und ein Gegenstandsteilbild (82), das eine Ergänzung zum Vorrichtungsteilbild bildet;
- Anbringen des Fensters (32,33) des tragbaren Gegenstands vor den Anzeigemitteln der Vorrichtung;
- durch die Anzeigemittel der Vorrichtung das besagte Vorrichtungsteilbild (81) anzeigen lassen;

- von der Vorrichtung dem besagten Gegenstandsteilbild (82) entsprechende Gegenstandsteilbilddaten an den tragbaren Gegenstand übertragen lassen; und

- von den Anzeigemitteln des tragbaren Gegenstands das besagte Gegenstandsteilbild (82) unter Anwendung der besagten Gegenstandsteilbilddaten anzeigen lassen.

7. Verfahren gemäß Anspruch 6, bei dem das Zerlegen des bestimmten Bildes (80) in ein Vorrichtungsteilbild (81) und ein Gegenstandsteilbild (82) zufällig ist.

8. Verfahren gemäß Anspruch 6, das darin besteht, durch die Anzeigemittel (125) der Vorrichtung elektrische Energie und die besagten Gegenstandsteilbilddaten optisch erzeugen zu lassen und einen tragbaren Gegenstand (126) anzuwenden, der mindestens ein Photoelement (134,135) zur Aufnahme der elektrischen Energie und der besagten Gegenstandsteilbilddaten enthält.

9. Verfahren gemäß Anspruch 6, das darin besteht, durch die Vorrichtung die Gegenstandsteilbilddaten (82) vor deren Übertragung an den tragbaren Gegenstand verschlüsseln zu lassen und diese nach deren Übertragung vom tragbaren Gegenstand entschlüsseln zu lassen.

10. Verfahren gemäß Anspruch 1, bei dem die Bildverarbeitungsmittel Lichtprojektionsmittel (97) umfassen, **dadurch gekennzeichnet, daß** es folgende Schritte umfaßt:

- durch die Speichermittel des tragbaren Gegenstands (94) einem ersten Bild einer visuellen Identität (151) entsprechende Bilddaten speichern lassen;
- durch die Vorrichtung dem besagten zweiten Bild entsprechende Bilddaten an den tragbaren Gegenstand übertragen lassen; und
- die Anzeigemittel (17) durch die Verarbeitungsmittel (9) des tragbaren Gegenstands in Abhängigkeit der besagten gespeicherten Bilddaten und der besagten übertragenen Bilddaten steuern lassen, sodass das besagte bestimmte Bild vor dem durchgehenden Fenster (32,33) angezeigt wird.

**Claims**

1. Method for producing a given image using a device (40, 91, 125) and a portable object (8, 94, 126), the device comprising information processing means (2), information storage means (3, 4) and image processing means (18, 97, 125), and the portable object comprising information processing means (9), information storage means (10), a window (32, 33) and display means (17) capable of displaying an image in front of the window, **characterised in that** it comprises the following steps:

- position said window of the portable object in front of the image processing means (18, 97, 125) of the device so that optical communication can take place between them;
- produce a first image in front of said window;
- use the display means (17) of the portable object to display a second image of portable object; and
- obtain said given image by superimposing the first image and the second image of portable object.

2. Method according to claim 1, to authenticate an image to be authenticated by comparing it with a reference image, in which the portable object is designed to display a mask of given shape in front of the window (32, 33) and the image processing means of the device comprise image sampling means (18), **characterised in that** it comprises the following steps:

- position the window of the portable object in front of the image sampling means of the device;
- use the display means (17) of the portable object to display a mask in front of the window, so that it masks a given portion of the window;
- present an image to be authenticated in front of the image sampling means so that the window is in between them;
- use the image sampling means to sample image information to be authenticated related to an image portion to be authenticated, as it appears through the window, then transmit to the portable object this image information to be authenticated; and
- use the processing means (9) of the portable object to compare said image information to be authenticated, with reference image information, related to a reference image portion obtained by using the same mask and stored in the storage means (10) of the portable object.

3. Method according to claim 2, in which said mask has a random shape.

4. Method according to claim 2, which consists in defining several masks whose respective shapes are complementary and in successively sampling several items of image information to be authenticated obtained respectively by using several of said masks.

5. Method according to claim 2, in which the given image is defined by a given number of image points and the mask area depends on this number.

6. Method according to claim 1, in which the image processing means of the device comprise display means (125), **characterised in that** it comprises the following steps:

   - decompose said given image (80) into a partial device image (81) and a partial object image (82) forming a complement of the partial device image;
   - position the window (32, 33) of the portable object in front of the display means of the device;
   - use the display means of the device to display said partial device image (81);
   - use the device to transmit to the portable object partial object image information corresponding to said partial object image (82); and
   - use the display means of the portable object to display said partial object image (82), using said partial object image information.

7. Method according to claim 6, in which the decomposition of the given image (80) into a partial device image (81) and a partial object image (82) is random.

8. Method according to claim 6, which consists in optically producing electrical energy and said partial object image information by the display means (125) of the device and in using a portable object (126) including at least one photoelectric cell (134, 135) to receive the electrical energy and said partial object image information.

9. Method according to claim 6, which consists in using the device to encrypt the partial object image information (82) before its transmission to the portable object and in using the portable object to decrypt it after its transmission.

10. Method according to claim 1, in which the image processing means comprise light projection means (97), **characterised in that** it comprises the following steps:

    - use the storage means of the portable object (94) to store image information corresponding to a first visual identity image (151);
    - use the device to transmit to the portable object image information corresponding to said second image; and
    - use the processing means (9) of the portable object to control the display means (17), according to said image information stored and said image information transmitted, in order to display said given image in front of the window (32, 33).

CAPTEUR OPTIQUE

18

3 ROM    4 RAM

7

5

μp

1    2

Fig.1

AFFICHEUR A CRISTAUX LIQUIDES    17

CIRCUIT DE GESTION D'AFFICHEUR    16

RAM    14

μp    11

12

13    9

15    MEMOIRE NON VOLATILE
10

8

21    22

17

III    III

15

23

8

Fig.2

21    23    17    31    32

15    33    Fig.3

8

Fig.4

Fig.6a

Fig.6b

TAB_MSQ

| NUM | MASQUE |   |   |   |   |   |   |   |
|-----|--------|---|---|---|---|---|---|---|
| 1 | 1 | 0 | 1 | 0 | 0 | 1 | 0 | 1 |
| 2 | 1 | 1 | 0 | 0 | 1 | 1 | 0 | 0 |
| 3 | 0 | 1 | 1 | 0 | 0 | 1 | 1 | 0 |
| . | | | | . | | | | |
| . | | | | . | | | | |
| . | | | | . | | | | |
| . | | | | . | | | | |
| . | | | | . | | | | |
| 20 | 1 | 1 | 1 | 0 | 1 | 1 | 1 | 1 |

Fig.4a

DEBUT

DEMANDE D'AUTHENTIFICATION — 51

INITIALISATION DE NUM — 52

SELECTION DU MASQUE — 53

ENVOI DE OK-ACQ AU LECTEUR ET TEMPORISATION t — 54

— 55
ACQUISITION D'EMPREINTE ET ENVOI A LA CARTE DANS LE TEMPS t ? — OUI / NON

NON → BLOCAGE CARTE — 56

— 57
NOMBRE DE POINTS MASQUES < k? — OUI / NON

VERIFICATION DE L'EMPREINTE — 59

591
NOMBRE DE POINTS RECONNUS ≥ MIN ? — OUI / NON

ENVOI AU LECTEUR DE LA REPONSE: ' AUTHENTIFICATION CONFIRMEE ' — 593

ENVOI AU LECTEUR DE LA REPONSE: ' BLOCAGE CARTE , EMPREINTE SUSPECTE ' — 58

ENVOI AU LECTEUR DE LA REPONSE: 'NOMBRE DE POINTS INSUFFISANT, AUTHENTIFICATION NON EFFECTUEE' — 592

FIN

Fig.5

Fig.7a

Fig.7b

Fig.7c

Fig.7d

TAB_MSQ_a

| NUM | MASQUE 1 | | | | | | | | MASQUE 2 | | | | | | | | MASQUE 3 | | | | | | | |
|---|---|---|---|---|---|---|---|---|---|---|---|---|---|---|---|---|---|---|---|---|---|---|---|---|
| 1 | 0 | 1 | 0 | 0 | 1 | 0 | 0 | 1 | 0 | 0 | 1 | 0 | 0 | 1 | 0 | 0 | 1 | 0 | 0 | 1 | 0 | 0 | 1 | 0 |
| 2 | 0 | 1 | 0 | 0 | 0 | 1 | 1 | 0 | 0 | 0 | 1 | 0 | 1 | 0 | 0 | 0 | 1 | 0 | 0 | 1 | 0 | 0 | 0 | 1 |
| 3 | 0 | 0 | 1 | 1 | 0 | 0 | 0 | 1 | 0 | 1 | 0 | 0 | 0 | 1 | 0 | 0 | 1 | 0 | 0 | 0 | 1 | 0 | 1 | 0 |
| . | | | | | | | | | | | | | | | | | | | | | | | | |
| . | | | | | | | | | | | | | | | | | | | | | | | | |
| x | | | | | | | | | | | | | | | | | | | | | | | | |

Fig.10a

TAB_MSQ_b

| NUM | MASQUE 1 | | | | | | | | MASQUE 2 | | | | | | | | MASQUE 3 | | | | | | | |
|---|---|---|---|---|---|---|---|---|---|---|---|---|---|---|---|---|---|---|---|---|---|---|---|---|
| 1 | 0 | 1 | 0 | 0 | 0 | 0 | 0 | 0 | 0 | 0 | 0 | 1 | 0 | 0 | 0 | 0 | 0 | 0 | 0 | 0 | 0 | 0 | 1 | 0 |
| 2 | 0 | 0 | 1 | 0 | 0 | 0 | 0 | 0 | 0 | 0 | 0 | 0 | 1 | 0 | 0 | 0 | 0 | 0 | 0 | 0 | 0 | 0 | 0 | 1 |
| . | | | | | | | | | | | | | | | | | | | | | | | | |
| . | | | | | | | | | | | | | | | | | | | | | | | | |
| y | | | | | | | | | | | | | | | | | | | | | | | | |

Fig.10b

TAB_MSQ_c

| NUM | MASQUE 1 | | | | | | | | MASQUE 2 | | | | | | | | MASQUE 3 | | | | | | | |
|---|---|---|---|---|---|---|---|---|---|---|---|---|---|---|---|---|---|---|---|---|---|---|---|---|
| 1 | 1 | 1 | 0 | 0 | 1 | 1 | 0 | 0 | 0 | 1 | 1 | 0 | 0 | 1 | 1 | 0 | 0 | 0 | 1 | 1 | 0 | 0 | 1 | 1 |
| 2 | 1 | 0 | 1 | 0 | 1 | 1 | 0 | 0 | 0 | 1 | 0 | 1 | 0 | 1 | 1 | 0 | 0 | 0 | 1 | 1 | 0 | 1 | 0 | 1 |
| . | | | | | | | | | | | | | | | | | | | | | | | | |
| . | | | | | | | | | | | | | | | | | | | | | | | | |
| z | | | | | | | | | | | | | | | | | | | | | | | | |

Fig.10c

20

```
                    ┌──────────┐
                    │  DEBUT   │
                    └────┬─────┘
                         │
              ┌──────────────────────┐
              │       DEMANDE        │ ⌐ 111
              │  D'AUTHENTIFICATION  │
              └──────────┬───────────┘
                         │
              ┌──────────────────────┐
              │ INITIALISATION DE NUM │ ⌐ 112
              │   N° MASQUE  i=1      │
              └──────────┬───────────┘
                         │
              ┌──────────────────────┐
              │  SELECTION DU MASQUE  │ ⌐ 113
              └──────────┬───────────┘
                         │
              ┌──────────────────────┐
              │   ENVOI DE OK-ACQ     │ ⌐ 114
              │     AU LECTEUR        │
              └──────────┬───────────┘
                         │
              ┌──────────────────────┐
              │ ACQUISITION D' EMPREINTE │ ⌐ 115
              │  ET ENVOI A LA CARTE  │
              └──────────┬───────────┘
                         │
              ┌──────────────────────┐
              │    VERIFICATION DE    │ ⌐ 116
              │     L'EMPREINTE       │
              └──────────┬───────────┘
                         │            ⌐ 117
       OUI  ╱────────────────────────╲  NON
      ──────┤ CUMUL DU NOMBRE DE POINTS ├──────
            ╲  RECONNUS ≥ MIN ?        ╱
             ╲────────────────────────╱
```

$$i = (i+1)$$ ⌐ 121

ENVOI AU LECTEUR DU MESSAGE ⌐ 122
'ACQUISITION INSUFFISANTE'

NON ╱ i = 3 ╲ OUI ⌐ 119

ENVOI AU LECTEUR
DE LA REPONSE:
'AUTHENTIFICATION ⌐ 118
CONFIRMEE'

ENVOI AU LECTEUR
DE LA REPONSE: ⌐ 120
'NOMBRE DE POINTS INSUFFISANT;
AUTHENTIFICATION NON EFFECTUEE'

Fig.11

┌──────────┐
│   FIN    │
└──────────┘

Fig.8a

Fig.8b

Fig.8c

Fig.12

Fig.13

Fig.14

Fig.5a

Fig.5b

Fig.5c

Fig.5d

Fig.9

Fig.15

Fig.16

Fig.17

Fig.18